# EUROPÄISCHE PATENTSCHRIFT

(11) **EP 2 697 845 B1**
(45) Veröffentlichungstag und Bekanntmachung des Hinweises auf die Patenterteilung: **14.06.2017**
(21) Anmeldenummer: 12711363.7
(22) Anmeldetag: 13.03.2012
(51) Int. Cl.: H01M 2/22, H01G 4/38, H01G 9/008, H01G 9/08, H01G 2/10, H01G 4/224, H01M 2/10, H01M 2/20, H01G 4/228

(54) **SPEICHEREINHEIT ZUM SPEICHERN ELEKTRISCHER ENERGIE MIT EINEM NIEDEROHMIG KONTAKTIERTEN ENERGIESPEICHER**
STORAGE UNIT FOR STORING ELECTRICAL ENERGY HAVING A LOW-RESISTANCE CONTACTED ENERGY STORE
UNITÉ D'ACCUMULATION POUR ACCUMULER DE L'ÉNERGIE ÉLECTRIQUE COMPORTANT UN ACCUMULATEUR D'ÉNERGIE MIS EN CONTACT EN BASSE IMPÉDANCE

(30) Priorität: 13.04.2011 DE 102011007325
(43) Veröffentlichungstag der Anmeldung: 19.02.2014
(73) Patentinhaber: Robert Bosch GmbH, 70442 Stuttgart (DE)
(72) Erfinder: DILLMANN, Adolf, 72525 Muensingen (DE); HOLP, Reiner, 72474 Winterlingen (DE); HUEHNER, Stefan, 72127 Kusterdingen (DE)
(86) Internationale Anmeldenummer: PCT/EP2012/054313
(87) Internationale Veröffentlichungsnummer: WO 2012/139837

(56) Entgegenhaltungen:
- EP-A1- 1 986 250
- WO-A2-2008/067564
- DE-A1-102008 050 437
- JP-A- 11 067 184
- US-A1- 2009 291 329

## Beschreibung

### Stand der Technik

Die Erfindung betrifft eine Speichereinheit. Die Speichereinheit weist wenigstens einen Energiespeicher auf, wobei der Energiespeicher einen positiven und einen negativen elektrischen Anschluss aufweist. Der Energiespeicher ist ausgebildet, über den positiven und den negativen elektrischen Anschluss mit elektrischer Energie aufgeladen und entladen zu werden.

Bei aus dem Stand der Technik bekannten Speichereinheiten mit Energiespeichern besteht das Problem, dass Verbindungsleitungen zu elektrischen Anschlüssen des Energiespeichers beim Bewegtwerden der Energiespeicher relativ zu einem Gehäuse der Speichereinheit, brechen können. Bei Energiespeichern, welche insbesondere als Wickelkondensator ausgebildet sind, besteht das Problem, dass thermische Ausdehnungen des Wickelkondensators zu einem Brechen der elektrischen Verbindungen im Bereich der elektrischen Anschlüsse führen können.

Aus der US 2009/0291329 A1 ist eine Lithiumbatterie bekannt, die mittels einer Lötlitze mit einem Motherboard verbunden wird. Die Litze verbindet einen Anschluss der Batterie mit einer Leiterbahn auf einer Leiterplatte. Die Litze bewirkt, dass der Anschluss beim Verlöten in einem Reflow-Ofen mit der Leiterbahn verbunden wird. Dabei fließt das Lot in die Öffnungen der Litze und wird von dieser gehalten ohne auszulaufen, so dass das Lot die Batterie und die Litze fixiert.

In der Schrift EP 1 986 250 A1 ist ein Batteriemodul beschrieben, welches mindestens eine flache Batteriezelle, mindestens zwei Elektrodenableiter und ein Gehäuse sowie mindestens ein elastisches und elektrisch leitfähiges Element umfasst. Das elastische und elektrisch leitfähige Element ist dabei zwischen der flachen Batteriezelle und einem metallischen Elektrodenableiter angeordnet. Die flache Batteriezelle und ein metallischer Elektrodenableiter sind durch eine mechanische Verpressung in elektrischem Kontakt.

### Offenbarung der Erfindung

Die Erfindung ist durch die in Anspruch 1 angegebenen Merkmale definiert. Erfindungsgemäß weist die Speichereinheit eine mit dem positiven Anschluss mindestens mittelbar verbundene elektrisch leitfähige Kontaktschiene und eine mit dem negativen Anschluss mindestens mittelbar verbundene elektrisch leitfähige Kontaktschiene auf. Die Kontaktschienen sind jeweils mit wenigstens einem äußeren elektrischen Anschluss der Speichereinheit verbunden. Die Kontaktschienen sind jeweils mittels eines elektrisch leitfähigen Vlieses, umfassend eine Vielzahl von Einzelleitern, mit dem jeweiligen Anschluss des Energiespeichers elektrisch verbunden.

Durch die Verbindung der Kontaktschiene über ein Vlies mit dem elektrischen Anschluss, beispielsweise einer Schoopschicht eines Wickelkondensators, kann vorteilhaft eine sichere elektrische Verbindung zwischen der Kontaktschiene und den Anschlüssen des Energiespeichers erzeugt sein, da das Vlies vorteilhaft ausgebildet ist, bei Bewegungen, welche durch thermische Ausdehnungen verursacht sind, nicht zu brechen.

Ein Vlies versteht sich als ein Verbund von vielen elektrisch leitfähigen Einzelleitern, welche bevorzugt als Einzelfaser ausgebildet sind. Bei dem Vlies weisen die Einzelleiter, insbesondere die Einzelfasern bevorzugt keine gemeinsame Ausrichtung auf und sind durch Ihre Unordnung miteinander mechanisch verbunden, insbesondere verkettet und/oder verhakt.

Bei einer Litze gemäß dem Stand der Technik weisen die Einzelleiter bevorzugt eine im Wesentlichen gemeinsame Ausrichtung auf. Beispielsweise kann die Litze aus mehreren miteinander verflochtenen Bündeln gebildet sein, wobei jedes Bündel eine Mehrzahl von Einzelleitern umfasst. Die Litze ist bevorzugt als flach ausgebildete, insbesondere bandförmige oder mattenförmige Litze ausgebildet. Vorteilhaft kann der Anschluss des Energiespeichers, insbesondere die elektrisch leitfähige Schicht durch die großflächige Kontaktierung dünner ausgebildet sein als bei einer punktweisen Kontaktierung. So kann vorteilhaft Material eingespart werden.

In einer nicht erfindungsgemäßen Ausführung erstreckt sich eine Längsausrichtung der Einzelleiter der Litze - bevorzugt mit einer überwiegenden Komponente - entlang einer Längsrichtung der Kontaktschiene. So kann vorteilhaft beim Bewegen des Anschlusses durch Erwärmung des Energiespeichers ein Schleifkontakt durch Einzelleiterlängsabschnitte gebildet sein, die den Anschluss, insbesondere eine elektrisch leitfähige Schicht schleifend galvanisch kontaktieren.

In einer anderen, nicht erfindungsgemäßen Ausführungsform erstreckt sich eine Längsausrichtung der Einzelleiter der Litze mit wenigstens einer Querkomponente oder quer zu einer Längsrichtung der Kontaktschiene. So kann vorteilhaft erreicht werden, dass beispielsweise im Falle einer punktweisen Befestigung von Abschnitten der Einzelleiter mit dem elektrischen Anschluss ein bewegender Anschluss, verursacht durch thermische Ausdehnung, die Einzelfaser quer zu ihrer Längsrichtung verbiegt. Weiter bevorzugt verläuft bei dieser Ausführungsform eine Längserstreckung der Einzellitzen quer zu einer Längserstreckung des Energiespeichers.

Der Energiespeicher ist beispielsweise ausgebildet, sich bei einem Erwärmtwerden entlang seiner Längserstreckung stärker auszudehnen als entlang einer dazu quer verlaufenden Quererstreckung. Bei einem Wickelkondensator ist dies insbesondere dann der Fall, wenn die Wickelachse, um die die Elektroden des Wickelkondensators gewickelt sind, quer zur Längserstreckung des Energiespeichers verläuft.

In einer bevorzugten Ausführungsform ist wenigstens ein Teil oder nur ein Teil der Einzelleiter des Vlies auf einem Längsabschnitt des Einzelleiters mit dem elektrischen Anschluss des Energiespeichers insbesondere galvanisch verbunden und bilden so einen Schleifkontakt zum Kontaktieren des Anschlusses.

Bevorzugt berühren die Einzelleiter den elektrischen Anschluss des Energiespeichers oder zusätzlich die Kontaktschiene mit einem Längsabschnitt des Vlieses, der kein Endabschnitt des Vlieses ist. So ist vorteilhaft ein großflächiger galvanischer Kontakt zwischen einer Oberfläche einer flachen Erstreckung des Vlies und dem Anschluss, insbesondere einer Schoopschicht, und weiter bevorzugt einer gegenüberliegenden Oberfläche des Längsabschnittes mit der Kontaktschiene hergestellt.

Weiter bevorzugt ist ein Teil der Einzelleiter mit dem elektrischen Anschluss des Energiespeichers mittels Schweißen oder Löten verbunden.

Die galvanische Verbindung eines Teils der Einzelleiter mit dem elektrischen Anschluss des Energiespeichers und/oder der Kontaktschiene kann unabhängig oder zusätzlich zu der elektrischen Verbindung mittels Schweißen oder Löten ausgebildet sein.

Weiter vorteilhaft kann zusätzlich zu der Schweiß- oder der Lötverbindung die das Vlies, insbesondere ein Teil der Einzelleiter mit einem Längsabschnitt mit dem elektrischen Anschluss galvanisch verbunden sein.

Bevorzugt sind die Einzelleiter vergoldet oder versilbert. Auf diese Weise kann vorteilhaft ein gegenüber Oxidation resistenter Schleifkontakt gebildet sein, welcher die elektrisch leitfähige Schicht des Energiespeichers, insbesondere die Schoopschicht beim thermischen Ausdehnen und Wiederzusammenziehen schleifend galvanisch kontaktiert. Weiter vorteilhaft kann der Anschluss, insbesondere die elektrisch leitfähige Schicht Silber oder Gold umfassen. Bevorzugt weist die elektrisch leitfähige Schicht eine zum schleifenden Kontaktiertwerden ausgebildete Silber- oder Goldschicht auf.

Mittels der Schweiß- oder Lötverbindung kann eine gegenüber Oxidationseinflüssen des elektrischen Anschlusses oder gegenüber Feuchtigkeit resistente elektrische Verbindung zwischen dem Vlies mit dem elektrischen Anschluss, insbesondere einer Schoopschicht eines Wickelkondensators, gebildet sein.

Mittels der so gebildeten Verbindung kann die galvanische Kontaktierung, welche mittels vieler Berührungsorte der Einzelfasern mit dem Anschluss, insbesondere der elektrisch leitfähigen Schicht, erzeugt ist, eine zu der Schweiß- oder Lötverbindung zusätzliche Verbindung bilden. Die zusätzliche galvanische Verbindung kann vorteilhaft den elektrischen Kontakt zwischen der Kontaktschiene und dem elektrischen Anschluss über das Vlies sicherstellen, wenn beispielsweise die Schweiß- oder die Lötverbindung durch Vibrationen bricht oder durch Belastung reißt.

Der Anschluss des Energiespeichers ist bevorzugt als elektrisch leitfähige Schicht ausgebildet. Weiter vorteilhaft kann so insbesondere im Falle eines Anschlusses in Form einer elektrisch leitfähigen Schicht eine niederohmige Verbindung zwischen dem Anschluss des Energiespeichers und der Kontaktschiene gebildet sein.

In einer bevorzugten Ausführungsform ist das Vlies zwischen der sich bevorzugt flach erstreckenden Kontaktschiene und dem elektrischen Anschluss angeordnet. Das Vlies weist bevorzugt eine flache Erstreckung auf, beispielsweise als eine Art Matte. So kann vorteilhaft - ähnlich einer Sandwich-Anordnung - eine Schicht-Anordnung gebildet sein, wobei das Vlies zwischen dem bevorzugt als elektrisch leitfähige Schicht gebildeten Anschluss des Energiespeichers und einem sich flach erstreckenden Bereich der Kontaktschiene angeordnet ist. Bevorzugt liegt das Vlies mit seiner vollen flachen Erstreckung einer Seite auf dem Anschluss auf und mit einer gegenüberliegenden Seite mit seiner vollen flachen Erstreckung auf der Kontaktschiene, insbesondere einem sich zum Anschluss parallel erstreckenden Abschnitt der Kontaktschiene.

Bevorzugt ist das Vlies, insbesondere die Einzelleiter, quer zu einer flachen Erstreckung federnd ausgebildet. Dadurch und durch die galvanische Verbindung kann die Litze vorteilhaft auch bei thermischen Verformungen, beispielsweise einer Wellenverformung der elektrisch leitfähigen Schicht nachfedern und die Verformung zum Halten der Galvanischen Verbindung ausgleichen. Dazu kann das Vlies mit einer flachen Erstreckung eine den Anschluss bildende elektrisch leitfähige Schicht und die sich bevorzugt flach erstreckende Kontaktschiene galvanisch verbinden und so eine Verbindungsschicht bilden. Die Einzelleiter des federnd ausgebildeten Litze Vlieses weisen bevorzugt eine Beimengung umfassend Chrom, Silber, Eisen, Titan, Silizium und zum größten Teil Kupfer auf.

Die Anteile der Beimengung beträgt bevorzugt 0,5 % Chrom, 0,1 % Silber, 0,08 % Eisen, 0,06 % Titan und 0,03 % Silizium. Eine elektrische Leitfähigkeit d des Vlieses beträgt bevorzugt wenigstens 40, bevorzugt 46 Mega-Siemens pro Meter.

Beispielsweise ist das Material des Vlieses eine Kupferlegierung gemäß der US-Norm United-Numbering-System C18080.

In einer bevorzugten Ausführungsform ist wenigstens ein Teil der Einzelleiter mit dem elektrischen Anschluss des Energiespeichers mittels Schweißen oder Löten verbunden und der wenigstens eine Teil oder ein anderer Teil der Einzelleiter mit dem elektrischen Anschluss des Energiespeichers galvanisch verbunden. Bevorzugt ist die Zahl der galvanischen Verbindungen von Einzelleitern mit dem Anschluss größer als die Zahl der gelöteten oder geschweißten Verbindungen der Einzelleiter mit dem Anschluss. Auf diese Weise kann vorteilhaft ein sicherer und weiter vorteilhaft niederohmiger galvanischer Kontakt zwischen dem Vlies und dem elektrischen Anschluss gebildet sein, welcher den geschweißten oder gelöteten Kontakt vorteilhaft ergänzt. Erfindungsgemäß ist wenigstens ein Teil der Einzelleiter des Vlies mit einem Längsabschnitt mit der Kontaktschiene verschweißt oder verlötet.

Auf diese Weise kann vorteilhaft wie bei der Kontaktierung des Vlies mit dem elektrischen Anschluss mittels des Vlieses zwei zueinander verschiedene Kontaktierungen mit der Kontaktschiene gebildet sein. Auf diese Weise kann die Kontaktschiene einen Vliesbelag aufweisen. Bei einer Anordnung von zwei Kontaktschienen als zueinander beabstandete Wände kann der Vliesbelag in einen Innenraum weisen, wo ein Anschluss eines Energiespeichers kontaktiert werden kann.

In einer nicht erfindunsggemäßen Ausführung ist die zweite Kontaktierungsart zwischen der Litze oder der Kontaktschiene galvanisch und wird bevorzugt durch eine Vielzahl von Einzelleiterlängsabschnitten erzeugt, welche mit der Kontaktschiene, insbesondere einer Oberfläche der Kontaktschiene im galvanischen Wirkkontakt stehen.

In einer bevorzugten Ausführungsform sind der positive Anschluss und der negative Anschluss des Energiespeichers durch eine elektrisch leitfähige Schicht, insbesondere eine Schoopschicht gebildet. Die Schoopschicht ist bevorzugt eine Legierung umfassend Kupfer und Zink. In einer anderen oder zusätzlichen Ausführungsform umfasst die Schoopschicht eine Aluminiumschicht oder eine Legierung umfassend Aluminium.

Das Vlies weist bevorzugt überwiegend Kupfer auf. In einer bevorzugten Ausführungsform umfasst das Vlies eine Legierung aus Kupfer und Zink.

In einer vorteilhaften Ausführungsform sind die Einzelleiter des Vlieses vergoldet oder versilbert. Dadurch kann ein guter galvanischer Kontakt mit dem Anschluss und der Kontaktschiene erzeugt sein.

Eine Dickenabmessung eines flach ausgebildeten Vlies beträgt beispielsweise zwischen 0,5 und 2 Millimeter, bevorzugt 1 Millimeter.

Eine Einzelfaser des Vlies weist bevorzugt einen Durchmesser zwischen 0,01 und 0,3 Millimeter auf, bevorzugt zwischen 0,1 Millimeter und 0,5 Milllimeter.

Nicht im Rahmen der Erfindung ist auch eine verzinnte Kupferlitze als Litze denkbar. Dadurch wird vorteilhaft ein punktweises Verlöten der Litze mit Lötzinn erleichtert.

Die Kontaktschiene ist bevorzugt aus Kupfer oder einer Kupferhaltigen Legierung gebildet. Die Kontaktschiene ist beispielsweise mit einer Zinnschicht verzinnt. Die Zinnschicht beträgt beispielsweise zwischen 3 Mikrometer und 10 Mikrometer.

Eine Dicke einer als Blech ausgebildeten Kontaktschiene beträgt beispielsweise zwischen 0,5 und 2 Millimeter, bevorzugt 1 Millimeter.

Eine Längsabmessung der Speichereinheit beträgt beispielsweise zwischen 10 und 30 cm. Ein Abstand der Kontaktschienen beträgt beispielsweise zwischen 3 und 5 Zentimeter.

Vorteilhaft kann das Speicherelement Energiespeicher mit zueinander verschieden Längenabmessungen zwischen dem positiven und negativen Anschluss aufweisen. Die zueinander verschiedenen Längenabmessungen können vorteilhaft durch das Vlies ausgeglichen werden.

Die Erfindung wird nun im Folgenden anhand von Figuren und weiteren Ausführungsbeispielen beschrieben. Weitere vorteilhafte Ausführungsvarianten ergeben sich aus den Merkmalen der Figuren und den Merkmalen der abhängigen Ansprüche.

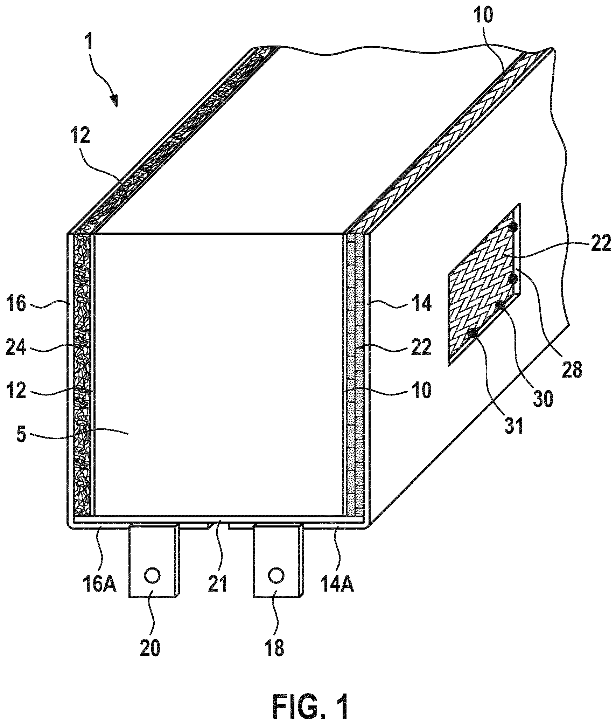

Figur 1 zeigt ein Ausführungsbeispiel für eine Speichereinheit mit einer Kontaktschiene, die über eine Litzenmatte und/oder ein Vliesmatte mit einem elektrischen Anschluss eines Energiespeichers der Speichereinheit verbunden ist, wobei lediglich die Ausführung mit einer Vliesmatte der Erfindung entspricht;

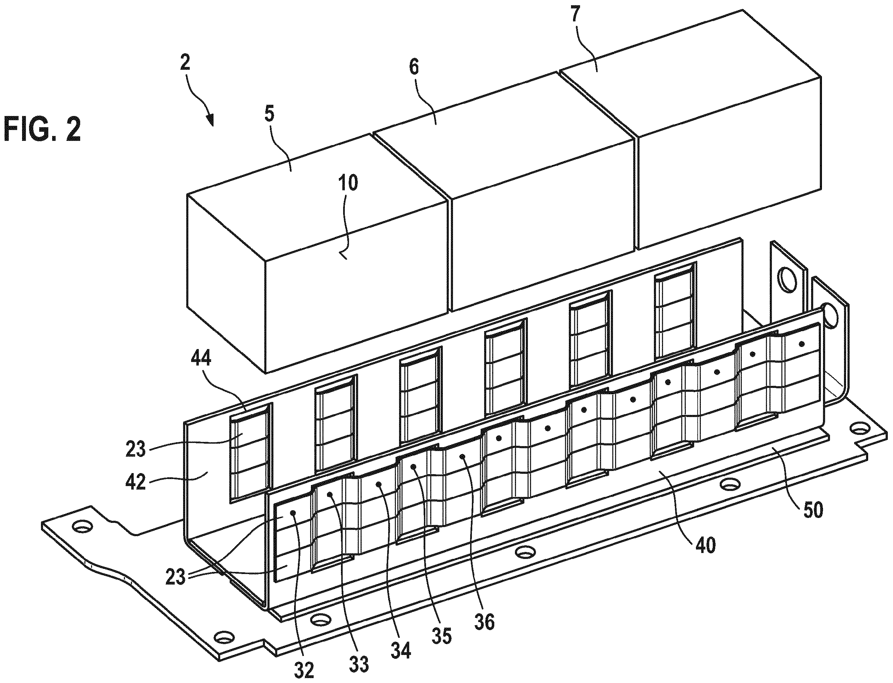

Figur 2 zeigt ein nicht erfindungsgemäßes Ausführungsbeispiel für eine Speichereinheit, deren Kontaktschienen Durchbrüche aufweisen und Flachlitzen mit den Kontaktschienen entlang einer Längsrichtung der Kontaktschienen verbunden sind und mit einem Längsabschnitt durch die Durchbrüche hindurchragen, um einen Anschluss eines Energiespeichers durch den Durchbruch hindurch zu kontaktieren;

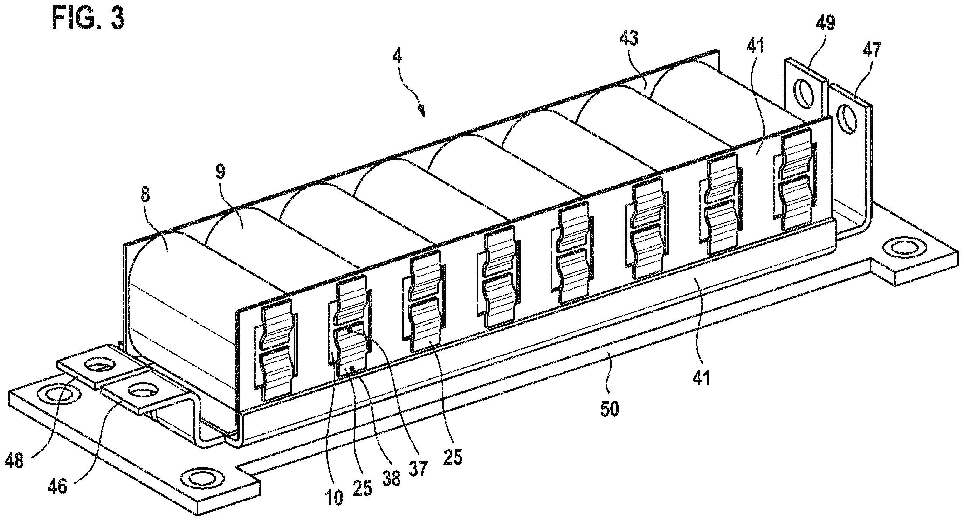

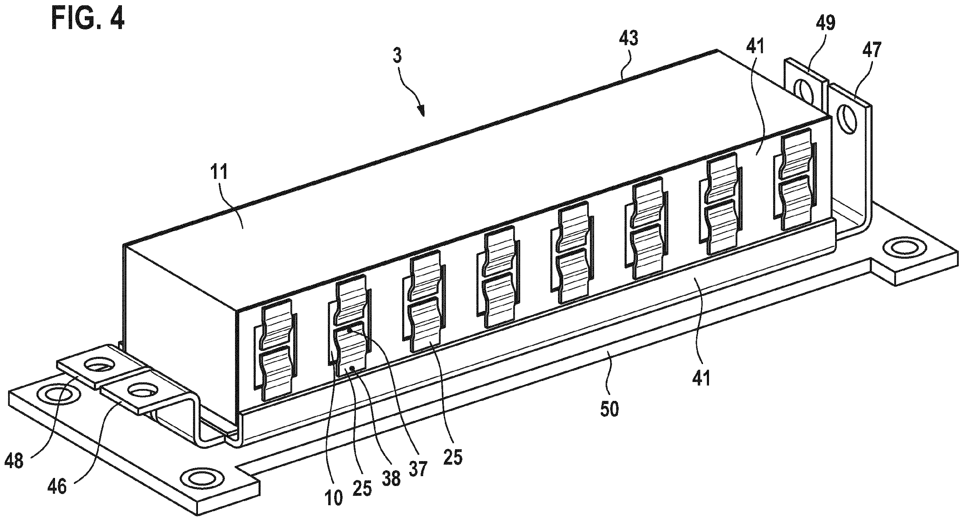

Figur 3 und 4 zeigen jeweils ein nicht erfindungsgemäßes Ausführungsbeispiel für eine Speichereinheit, deren Kontaktschienen Durchbrüche aufweisen und Flachlitzen mit den Kontaktschienen quer zu einer Längsrichtung der Kontaktschienen verbunden sind und mit einem Längsabschnitt durch die Durchbrüche hindurchragen, um einen Anschluss eines Energiespeichers durch den Durchbruch hindurch zu kontaktieren.

Figur 1 zeigt ein Ausführungsbeispiel für eine Speichereinheit 1. Die Speichereinheit 1 weist einen Energiespeicher 5 auf, welcher in diesem Ausführungsbeispiel ein Kondensator, insbesondere ein Wickelkondensator ist. Denkbar ist anstelle des Kondensators 5 auch ein Akkumulator, insbesondere ein Lithium-Akkumulator. Die Speichereinheit 1 weist eine elektrisch leitfähige Kontaktschiene 14 und eine elektrisch leitfähige Kontaktschiene 16 auf. Die Kontaktschienen sind jeweils durch ein entlang einer Längserstreckung der Kontaktschiene abgewinkeltes Blech gebildet.

Die Kontaktschienen 14 und 16 bilden zusammen eine Art Rinne oder Wanne, wobei ein abgewinkelter Abschnitt 14a der Kontaktschiene 14 und ein abgewinkelter Abschnitt 16a der Kontaktschiene 16 zusammen einen Boden der Rinne, beziehungsweise der Wanne bilden. Der Boden ist mittels einer Isolationsschicht 21, beispielsweise Polyethylen oder Polyimid von dem Energiespeicher elektrisch isoliert.

Mit dem Abschnitt 16a ist ein äußerer Anschluss 20 verbunden, welcher in diesem Ausführungsbeispiel als Blechstreifen ausgebildet ist und an den Abschnitt 16a angeformt ist. An den Abschnitt 14a ist ein äußerer Anschluss 18 angeformt, welcher wie der Anschluss 20 als Blechstreifen ausgebildet ist. Die Kontaktschienen 14 und 16 sind in diesem Ausführungsbeispiel als Blech ausgebildet. Das Blech weist beispielsweise eine Blechdicke zwischen 0,5 und 2 Millimeter auf.

Der Energiespeicher 5 weist einen positiven elektrischen Anschluss 10 und einen negativen elektrischen Anschluss 12 auf. Die Anschlüsse 10 und 12 sind jeweils als elektrisch leitfähige Schicht ausgebildet. Die Schicht weist beispielsweise eine Schichtdicke zwischen 0,3 und 1 Millimeter auf. Der Energiespeicher 5 ist wenigstens teilweise, in diesem Ausführungsbeispiel vollständig in der mittels der Kontaktschienen 14 und 16 gebildeten Rinne aufgenommen. Die elektrischen Anschlüsse 10 und 12, welche jeweils als Schicht ausgebildet sind, sind jeweils an einer Stirnseite des Energiespeichers 5 angeordnet und verlaufen in diesem Ausführungsbeispiel zueinander parallel. Mittels der Kontaktschienen 14 und 16 sind Wände der Rinne gebildet, welche sich zueinander parallel erstrecken. Der elektrische Anschluss 10 des Energiespeichers 5 erstreckt sich parallel zur Kontaktschiene 14, sodass der Anschluss 10 und die mittels der Kontaktschiene 14 gebildete Wand einen Hohlraum zwischeneinander einschließen. Die Kontaktschiene 16, insbesondere eine mittels der Kontaktschiene 16 gebildete Wand der Rinne verläuft parallel und zu dem Anschluss 12 beabstandet, sodass zwischen der Kontaktschiene 16 und dem Anschluss 12 sich ein Hohlraum erstreckt. In dem Hohlraum zwischen dem Anschluss 12 und der Kontaktschiene 16 ist in diesem Ausführungsbeispiel ein elektrisch leitfähiges Vlies 24 angeordnet. Das Vlies ist in diesem Ausführungsbeispiel ein Kupfervlies, welches eine Vielzahl von elektrisch leitfähigen faserförmigen Einzelleitern umfasst, wobei die Einzelfleiter zueinander ungeordnet ausgerichtet sind.

In dem Hohlraum zwischen dem Anschluss 10 und der Kontaktschiene 14 ist eine flach ausgebildete Litze angeordnet. Die Litze ist durch ein Drahtgeflecht gebildet, wobei drahtförmige Einzelleiter des Drahtgeflechts sich im Wesentlichen in einer gemeinsamen Flechtrichtung erstrecken.

Die Litze 22 bildet in diesem Ausführungsbeispiel eine Art flache Matte, welche den Hohlraum zwischen dem Anschluss 10 und der Kontaktschiene 14 wenigstens teilweise, in diesem Ausführungsbeispiel vollständig ausfüllt. Die Einzelleiter der Litze 22 berühren einander, sodass durch die Berührung ein galvanischer Kontakt zwischen den Einzelleitern hergestellt ist. Die Litze 22 berührt mit wenigstens einem Längsabschnitt von einem Teil der Einzelleiter, welche im Bereich des Anschlusses 10 angeordnet sind, die durch den elektrischen Anschluss 10 gebildete elektrisch leitfähige Schicht des Energiespeichers 5. Die Einzelleiter der Litze 22, welche im Bereich der Kontaktschiene 14 verlaufen, berühren wenigstens auf einem Längsabschnitt die Kontaktschiene 14. So ist ein galvanischer Kontakt zwischen der Kontaktschiene 14 und dem Anschluss 10 hergestellt.

Zusätzlich zu dem galvanischen Kontakt kann ein Schweiß- oder ein Lötkontakt wie folgt zwischen der Kontaktschiene 14 und dem Anschluss 10 hergestellt sein:
Die Kontaktschiene 14 weist einen Durchbruch 28 auf. Der Durchbruch 28 bildet in diesem Ausführungsbeispiel eine Art Fenster. Die Kontaktschiene 14 ist im Bereich eines Fensterrandes des Fensters mit wenigstens einem Längsabschnitt wenigstens eines Einzelleiters der Litze 22 mittels eines Schweißpunktes 30 verbunden. Dargestellt sind auch weitere Schweißpunkte, von denen der Schweißpunkt 31 beispielhaft bezeichnet ist. Die Litze 22 kann auch mit wenigstens einem Teil der Einzelleiter wenigstens auf einem Längsabschnitt des Teils der Einzelleiter mit dem Anschluss 10 mittels Punktschweißens oder Lötens verbunden sein. Dazu kann beispielsweise die Litze, insbesondere Einzelleiter der Litze durch das Fenster 28 hindurch mittels eines entsprechenden Werkzeuges geöffnet werden, und durch die so gebildete Öffnung ein Teil der Einzelleiter mit dem Anschluss 10 verschweißt oder verlötet werden. So kann zusätzlich zu dem bereits beschriebenen galvanischen Kontakt zwischen der Kontaktschiene 14 und dem Anschluss 10, der mittels der Litze 22 hergestellt ist, eine innige Materialverbindung wenigstens abschnittsweise in diesem Ausführungsbeispiel punktweise hergestellt sein, welche eine weitere gute elektrische Verbindung zwischen der Kontaktschiene 10 und dem elektrischen Anschluss 10 des Energiespeichers 5 sicherstellt. Wenn beispielsweise die Schweißverbindung oder Lötverbindung bricht, so kann die galvanische elektrische Verbindung weiterhin bestehen. Auf diese Weise ist ein sicherer elektrischer Kontakt zwischen der Kontaktschiene 14 im Anschluss 10 gegeben. Ein weiterer Vorteil der so gebildeten Kontaktierung besteht darin, dass die Kontaktschiene 14 und der Anschluss 10 großflächig miteinander verbunden sind. Da nämlich der Anschluss 10 - wie auch der Anschluss 12 - als elektrisch leitfähige Schicht ausgebildet ist, wird diese elektrisch leitfähige Schicht nicht nur punktweise beziehungsweise flächenabschnittsweise mit der Kontaktschiene 14, und dort auch nur mit einem Flächenbereich der Kontaktschiene 14 verbunden, sondern vielmehr eine volle Oberfläche der Kontaktschiene 14, welche einer vollen Oberfläche des Anschlusses 10 zugewandt ist, - ausgenommen Zwischenräume zwischen zueinander benachbarten, den Anschluss 10 beziehungsweise die Kontaktschiene 14 berührenden Einzelleitern - mittels der flach ausgebildeten Litze 22 elektrisch verbunden.

Die elektrische Verbindung zwischen der Kontaktschiene 16 und dem Anschluss 12 kann wie bereits am Beispiel des Anschlusses 10 erläutert, mittels der Litze 22 oder dem Vlies 24 nur galvanisch oder zusätzlich mittels einer Schweiß- oder Lötverbindung hergestellt sein.

Die Ausführungsform des elektrischen Verbindungsmittels zum galvanischen Verbinden als Vlies 24 oder als Litze 22 ist beispielhaft gegeben.

Erfindungsgemäß ist eine Speichereinheit 1, welche nur Vlies 24 zum elektrischen Verbinden der Anschlüsse des Energiespeichers 10 mit den Kontaktschienen aufweist.

Denkbar ist auch ein wie in Figur 1 dargestellte Speichereinheit 1, welcher sowohl Litze 22 als auch Vlies 24 zum elektrischen Verbinden der elektrischen Anschlüsse des Energiespeichers mit den Kontaktschienen aufweist. Vorteilhaft kann anstelle der Schweisspunkte 30 und 31 ein weiterer Litzenabschnitt zwischen die mattenförmige Litze 22 und die Kontaktschiene 14 eingeklemmt sein, der im Bereich eines freien Endes mit der Kontaktschiene von aussen verlötet oder verschweißt ist.

Figur 2 zeigt ein Ausführungsbeispiel für eine Speichereinheit 2. Die Speichereinheit 2 weist einen Energiespeicher 5 auf, sowie weitere Energiespeicher 6 und 7. Die Energiespeicher 5, 6 und 7 sind jeweils durch eine elektrische Isolationsschicht voneinander getrennt. Der Energiespeicher 5 weist einen positiven elektrischen Anschluss 10 auf, welcher in diesem Ausführungsbeispiel als elektrisch leitfähige Schicht, insbesondere eine Schoopschicht ausgebildet ist. Die Speichereinheit 2 umfasst auch eine elektrisch leitfähige Kontaktschiene 40 zum elektrischen Verbinden mit dem Anschluss 10 auf. Die Speichereinheit 2 weist auch eine elektrisch leitfähige Kontaktschiene 42 zum Verbinden mit einem in Figur 2 nicht sichtbaren auf einer gegenüberliegenden Stirnseite des Energiespeichers 5 angeordneten negativen elektrischen Anschlusses auf. Die Kontaktschienen 40 und 42 bilden zusammen eine Art Rinne oder Wanne, in welche die Energiespeicher 5, 6 und 7 aufgenommen werden können. Die Kontaktschiene 40 weist in diesem Ausführungsbeispiel sechs Durchbrüche auf, welche jeweils eine Art Fenster bilden. Die Kontaktschiene 42 weist ebenso sechs Durchbrüche auf, welche jeweils eine Art Fenster bilden. Der Durchbruch 44 ist beispielhaft bezeichnet. Die Kontaktschiene 40 ist mit einer flach ausgebildeten, bandförmigen Litze 23 verbunden, wobei die Litze an zwischen den Durchbrüchen angeordneten Stegen mittels Schweißpunkten befestigt und so elektrisch mit der Kontaktschiene 40 verbunden ist. Die Schweißpunkte 32, 34 und 36 sind beispielhaft bezeichnet. Die Litze 23 ragt zwischen den Stegen durch die Durchbrüche hindurch in einen Innenraum der Rinne, welche die Energiespeicher 5, 6 und 7 aufnimmt. Wenn die Energiespeicher 5, 6 und 7, welche zusammen mit der Rinne in einer Explosionsdarstellung dargestellt sind, in die Rinne eingeführt worden sind, kann die Litze 23 an Schweißpunkten 33, 35 und an weiteren Litzenlängsabschnitten, welche durch die Durchbrüche in den Innenraum hineinragen, mit dem elektrischen Anschluss 10, welcher in diesem Ausführungsbeispiel als elektrisch leitfähige Schicht ausgebildet ist, punktweise verschweißt werden. Die Schweißpunkte 33 und 35 sind beispielhaft bezeichnet.

Die Speichereinheit 2 weist in diesem Ausführungsbeispiel einen plattenförmig ausgebildeten Träger 50 auf, mit dem die Kontaktschienen 40 und 42 verbunden sind. Die Kontaktschienen 40 und 42 sind jeweils mit einem äußeren elektrischen Anschluss verbunden, sodass die Speichereinheit 2 von außen elektrisch kontaktiert werden kann, um die Energiespeicher 5, 6 und 7 über die Kontaktschienen 40 und 42 elektrisch aufzuladen und wieder zu entladen.

Figur 3 zeigt ein Ausführungsbeispiel für eine Speichereinheit 4, welche wie die Speichereinheit 2 einen Träger 50 umfasst, welcher mit Kontaktschienen 41 und 43 verbunden ist. Die Kontaktschienen 41 und 43 bilden zusammen einen Art Rinne, in der Energiespeicher, in diesem Ausführungsbeispiel Wickelkondensatoren aufgenommen sind, und welche jeweils aus zwei Blechen zusammengesetzt sind. Die Wickelkondensatoren 8 und 9 sind beispielhaft bezeichnet. Die Kontaktschiene 41 weist für jeden positiven Anschluss der Energiespeicher einen Durchbruch auf. Die Kontaktschiene 43 weist für jeden negativen Anschluss der Energiespeicher einen Durchbruch auf. Die Kontaktschiene 41 ist mittels Litzen 25 mit den positiven Anschlüssen der Energiespeicher elektrisch verbunden. Dazu ist die Litze 25 mit wenigstens einem Schweißpunkt 37 mit dem positiven Anschluss der Energiespeicher verbunden. Der positive Anschluss ist beispielsweise durch eine elektrisch leitfähige Schicht, insbesondere eine Schoopschicht, gebildet. Die Litze 25 ist mit einem Schweißpunkt 38, welcher entlang einer Längserstreckung der Litze von dem Schweißpunkt 37 beabstandet ist, mit der Kontaktschiene 14 verbunden. Die Litze 25 kann zusätzlich zum Schweißpunkt 37 den positiven Anschluss galvanisch kontaktieren. Der positive Anschluss 10 des Energiespeichers 9 ist beispielhaft bezeichnet. Dargestellt sind auch äußere Anschlüsse 46 und 47 der Kontaktschiene 41, welche jeweils an zueinander gegenüberliegenden Enden einer Längserstreckung der Kontaktschiene 41 angeordnet sind. Die Kontaktschiene 43 weist äußere Anschlüsse 48 und 49 auf, welche jeweils an zueinander gegenüberliegenden Enden der Kontaktschiene 43 angeordnet und in diesem Ausführungsbeispiel an diese angeformt sind.

Die Kontaktschiene 43 ist - in Figur 3 nicht sichtbar - wie die Kontaktschiene 41 mit negativen elektrischen Anschlüssen der Energiespeicher verbunden.

Figur 4 zeigt ein Ausführungsbeispiel für eine Speichereinheit 3. Die Speichereinheit 3 umfasst wie die Speichereinheit 4 einen Träger 50, welcher mit Kontaktschienen 41 und 43 verbunden ist. Die Kontaktschienen 41 und 43 bilden zusammen eine Rinne, welche einen Energiespeicher 11 aufnimmt. Der Energiespeicher 11 ist in diesem Ausführungsbeispiel quaderförmig ausgebildet. An Stirnseiten des Energiespeichers 11 sind jeweils elektrisch leitfähige Schichten ausgebildet, welche jeweils einen elektrischen Anschluss des Energiespeichers 11 - wie bei dem Energiespeicher 5 in Figur 2 der Anschluss 10 - bilden. Der Energiespeicher 11 ist, wie die Energiespeicher 8 und 9 mit den Kontaktschienen 41 und 43 mittels der Litze 25 elektrisch verbunden. So kann vorteilhaft sowohl ein Schweiß- oder Lötkontakt zwischen der Litze 25 und dem elektrischen Anschluss 10 gegeben sein, als auch ein galvanischer Kontakt durch Litzenbereiche, welche die den Anschluss 10 bildende elektrisch leitfähige Schicht berühren und so galvanisch kontaktieren.

Die Speichereinheit 3 und die Speichereinheit 4 können jeweils ein Kunststoffgehäuse aufweisen, welches die Kontaktschienen 41 und 43 mit den Energiespeichern umschließt. Das Gehäuse kann vorteilhaft Wände aufweisen, welche Vorsprungsbereiche aufweisen, die in die Durchbrüche der Kontaktschienen auf die Litzen 25 im Bereich der Durchbrüche drücken. Wenn beispielsweise durch Vibrationen die Schweißverbindung 37 bricht oder reißt, so können die neben der Schweißverbindung angeordneten Litzen wenigstens auf einem Längsabschnitt der Einzelleiter der Litze den Anschluss 10 galvanisch kontaktieren, angedrückt durch den Gehäusevorsprung, welcher auf die Litze drückt. Das Gehäuse kann beispielsweise durch ein Kunststoffgehäuse, insbesondere ein Mold-Gehäuse gebildet sein.

## Patentansprüche

1. Speichereinheit (1, 2, 3, 4) zum Speichern elektrischer Energie,
mit wenigstens einem Energiespeicher (5, 6, 7, 11) welcher einen positiven elektrischen Anschluss (10) und einen negativen elektrischen Anschluss (12) aufweist und ausgebildet ist, über den positiven Anschluss (10) und den negativen Anschluss (12) mit elektrischer Energie aufgeladen und entladen zu werden, wobei die Speichereinheit (1, 2, 3, 4) eine mit dem positiven Anschluss (10) mindestens mittelbar verbundene elektrisch leitfähige Kontaktschiene (14) und eine mit dem negativen Anschluss (12) mindestens mittelbar verbundene elektrisch leitfähige Kontaktschiene (16) aufweist, wobei die Kontaktschienen (14, 16) jeweils mit wenigstens einem äußeren elektrischen Anschluss (18, 20) der Speichereinheit (1) verbunden sind, wobei die Kontaktschienen (14, 16) jeweils mittels eines elektrisch leitfähigen Vlies (24), jeweils umfassend eine Vielzahl von keine gemeinsame Ausrichtung aufweisenden, und durch Ihre Unordnung miteinander mechanisch verbundenen Einzelleitern, mit dem jeweiligen Anschluss (10, 12) des Energiespeichers (5, 6, 7, 11) elektrisch verbunden sind,
**dadurch gekennzeichnet, dass**
wenigstens ein Teil der Einzelleiter des Vlieses (24) mit einem Längsabschnitt mit der Kontaktschiene (14, 16) verschweißt oder verlötet sind.

2. Speichereinheit (1, 2, 3, 4) nach Anspruch1,
**dadurch gekennzeichnet, dass**
wenigstens ein Teil der Einzelleiter auf einem Längsabschnitt der Einzelleiter mit dem elektrischen Anschluss (10, 12) des Energiespeichers (5, 6, 7, 11) verbunden sind.

3. Speichereinheit (1, 2, 3, 4) nach Anspruch 1 oder 2,
**dadurch gekennzeichnet, dass**
ein Teil der Einzelleiter mit dem elektrischen Anschluss (10, 12) des Energiespeichers (5, 6, 7, 11) mittels Schweißen oder Löten verbunden sind.

4. Speichereinheit (1, 2, 3, 4) nach Anspruch 2 oder 3,
**dadurch gekennzeichnet, dass**
ein Teil der Einzelleiter mit dem elektrischen Anschluss (10, 12) des Energiespeichers (5, 6, 7, 11) galvanisch verbunden sind und so einen Schleifkontakt zum Kontaktieren des Anschlusses bilden.

5. Speichereinheit (1, 2, 3, 4) nach einem der vorhergehenden Ansprüche,
**dadurch gekennzeichnet, dass**
wenigstens ein Teil der Einzelleiter mit dem elektrischen Anschluss (10, 12) des Energiespeichers (5, 6, 7, 11) mittels Schweißen oder Löten verbunden sind und der wenigstens eine Teil oder ein anderer Teil der Einzelleiter mit dem elektrischen Anschluss des Energiespeichers (5, 6, 7, 11) galvanisch verbunden sind, wobei die Zahl der galvanischen Verbindungen von Einzelleitern mit dem Anschluss größer ist als die Zahl der gelöteten oder geschweißten Verbindungen der Einzelleiter mit dem Anschluss (10, 11).

6. Speichereinheit (1, 2, 3, 4) nach einem der vorhergehenden Ansprüche,
**dadurch gekennzeichnet, dass**
der positive Anschluss (10) und der negative Anschluss (11) jeweils durch eine elektrisch leitfähige Schicht, insbesondere eine Schoopschicht gebildet ist.

7. Speichereinheit (1, 2, 3, 4) nach einem der vorhergehenden Ansprüche,
**dadurch gekennzeichnet, dass**
das Vlies (24) überwiegend Kupfer aufweist.

## Claims

1. Storage unit (1, 2, 3, 4) for storing electric power, having at least one energy store (5, 6, 7, 11) that has a positive electrical terminal (10) and a negative electrical terminal (12) and is designed to be charged with and discharged of electric power by means of the positive terminal (10) and the negative terminal (12), wherein the storage unit (1, 2, 3, 4) has an electrically conductive contact rail (14) connected at least indirectly to the positive terminal (10) and an electrically conductive contact rail (16) connected at least indirectly to the negative terminal (12), wherein each of the contact rails (14, 16) is connected to at least one outer electrical terminal (18, 20) of the storage unit (1), wherein each of the contact rails (14, 16) is electrically connected to the respective terminal (10, 12) of the energy store (5, 6, 7, 11) by means of an electrically conductive nonwoven (24) that in each case comprises a multiplicity of individual conductors that have no common orientation and are mechanically connected to one another due to the disordered arrangement thereof,
**characterized in that**
at least one portion of the individual conductors of the nonwoven (24) is welded or soldered to the contact rail (14, 16) by way of a longitudinal section.

2. Storage unit (1, 2, 3, 4) according to Claim 1, **characterized in that** at least one portion of the individual conductors is connected to the electrical terminal (10, 12) of the energy store (5, 6, 7, 11) on a longitudinal section of the individual conductors.

3. Storage unit (1, 2, 3, 4) according to Claim 1 or 2, **characterized in that** a portion of the individual conductors is connected to the electrical terminal (10, 12) of the energy store (5, 6, 7, 11) by means of welding or soldering.

4. Storage unit (1, 2, 3, 4) according to Claim 2 or 3, **characterized in that** a portion of the individual conductors is conductively connected to the electrical terminal (10, 12) of the energy store (5, 6, 7, 11) and thus forms a sliding contact in order to make contact with the terminal.

5. Storage unit (1, 2, 3, 4) according to one of the preceding claims, **characterized in that** at least one portion of the individual conductors is connected to the electrical terminal (10, 12) of the energy store (5, 6, 7, 11) by means of welding or soldering and the at least one portion or another portion of the individual conductors is conductively connected to the electrical terminal of the energy store (5, 6, 7, 11), wherein the number of conductive connections from individual conductors to the terminal is greater than the number of soldered or welded connections from the individual conductors to the terminal (10, 11).

6. Storage unit (1, 2, 3, 4) according to one of the preceding claims, **characterized in that** the positive terminal (10) and the negative terminal (11) are each formed by an electrically conductive layer, in particular a sprayed-metal layer.

7. Storage unit (1, 2, 3, 4) according to one of the preceding claims, **characterized in that** the nonwoven (24) predominantly comprises copper.

## Revendications

1. Unité d'accumulation (1, 2, 3, 4) destinée à accumuler de l'énergie électrique, comprenant au moins un accumulateur d'énergie (5, 6, 7, 11) qui possède une borne électrique positive (10) et une borne électrique négative (12) et qui est configuré pour être chargé en énergie électrique et déchargé par le biais de la borne positive (10) et de la borne négative (12), l'unité d'accumulation (1, 2, 3, 4) possédant une barre-bus de contact (14) électriquement conductrice reliée au moins indirectement à la borne positive (10) et une barre-bus de contact (16) électriquement conductrice reliée au moins indirectement à la borne négative (12), les barres-bus (14, 16) étant respectivement reliées à au moins une borne électrique externe (18, 20) de l'unité d'accumulation (1), les barres-bus (14, 16) étant reliées électriquement à la borne (10, 12) correspondante de l'accumulateur d'énergie (5, 6, 7, 11), respectivement au moyen d'un voile (24) électriquement conducteur, comprenant à chaque fois une pluralité de conducteurs individuels ne possédant pas une orientation commune et reliés mécaniquement entre eux par leur désordre,
**caractérisée en ce que**
au moins une partie des conducteurs individuels du voile (24) sont soudés ou brasés à la barre-bus (14, 16) par une portion longitudinale.

2. Unité d'accumulation (1, 2, 3, 4) selon la revendication 1, **caractérisée en ce qu'**au moins une partie des conducteurs individuels sont reliés sur une portion longitudinale des conducteurs individuels avec la borne électrique (10, 12) de l'accumulateur d'énergie (5, 6, 7, 11).

3. Unité d'accumulation (1, 2, 3, 4) selon la revendication 1 ou 2, **caractérisée en ce qu'**une partie des conducteurs individuels sont reliés à la borne électrique (10, 12) de l'accumulateur d'énergie (5, 6, 7, 11) par soudage ou brasage.

4. Unité d'accumulation (1, 2, 3, 4) selon la revendication 2 ou 3, **caractérisée en ce qu'**une partie des conducteurs individuels sont reliés galvaniquement à la borne électrique (10, 12) de l'accumulateur d'énergie (5, 6, 7, 11) et forment ainsi un contact à frottement pour établir le contact avec la borne.

5. Unité d'accumulation (1, 2, 3, 4) selon l'une des revendications précédentes, **caractérisée en ce qu'**au moins une partie des conducteurs individuels sont reliés à la borne électrique (10, 12) de l'accumulateur d'énergie (5, 6, 7, 11) par soudage ou brasage et l'au moins une partie ou une autre partie des conducteurs individuels sont reliés galvaniquement à la borne électrique de l'accumulateur d'énergie (5, 6, 7, 11), le nombre de liaisons galvaniques des conducteurs individuels étant supérieur au nombre de liaisons par soudage ou brasage des conducteurs individuels avec la borne (10, 11).

6. Unité d'accumulation (1, 2, 3, 4) selon l'une des revendications précédentes, **caractérisée en ce que** la borne positive (10) et la borne négative (11) sont respectivement formées par une couche électriquement conductrice, notamment une couche appliquée par procédé Schoop.

7. Unité d'accumulation (1, 2, 3, 4) selon l'une des revendications précédentes, **caractérisée en ce que** le voile (24) comprend principalement du cuivre.
